# EUROPEAN PATENT APPLICATION

(11) **EP 4 699 889 A1**
(43) Date of publication of application: **25.02.2026**
(21) Application number: 24195511.1
(22) Date of filing: 20.08.2024
(51) Int. Cl.: B61D 39/00, B60J 7/06

(54) **AUTOMATIC SLIDING SYSTEM FOR CARGO SPACE COVERS, ESPECIALLY FOR FREIGHT CARS AND OTHER VEHICLES**

(71) Applicant: Greenbrier Poland sp. z o.o., 58-100 Swidnica (PL)
(72) Inventor: Pazdzierniak, Przemyslaw, Swiebodzice (PL); Kakowczyk, Wieslaw, Swidnica (PL); Szmidt, Tomasz, Swidnica (PL); Studzinski, Dionizy, Swidnica (PL); Konstanty, Piotr, Wilków (PL); Koziol, Michal, Swidnica (PL)
(74) Representative: Bartula-Toch, Marta

(57) **Abstract**

The system for automatic sliding of cargo space covers includes at least one drive unit (1) per each leading edge of the cover (4), each drive unit (1) comprising a drive bracket (5) and a rolling wheel (6) connected by a belt transmission (7) to an electric motor (8) attached to the drive bracket (5). The drive bracket (5) is attached to the support structure of the cover (4) slidingly in the direction perpendicular to the running surface (9)

## Description

The object of the invention is a system for automatically moving cargo space covers, especially on freight cars and other vehicles, allowing them to be opened and closed

Freight transportation by rail and road faces the challenges of transporting various types of materials and this necessitates the use of various devices to protect them from the elements. One such device is tarpaulin covers, in which tarpaulins are stretched over movable arches that allow the cargo space to be covered to protect the transported cargo from the elements.

There are known solutions for moving tarpaulin covers manually to open and close them. Moving tarpaulin covers manually requires the involvement of more workers responsible for loading and unloading wagons. Pushing the risers on which the cover is stretched can cause it to bounce and return to its original position when it moves to the end of its opening or closing range, further increasing the time it takes to prepare it for loading/unloading. There are also cases, especially when the tracks are inclined at a certain angle, that the tarp itself returns to its initial position, which further requires it to be locked in the open/closed position.

Patent application AU2017285712 (A1) discloses a system for attaching a tarpaulin to close the side of a cargo space, which system includes an upper support beam and a lower support beam, and further includes a series of vertical support arches with a tarpaulin attached thereto, each of which is equipped with an upper and lower carriage so that the vertical support arches are connected by carriages to the support beams and are movable in the longitudinal direction relative to the support beams. The tarp can be opened and closed by moving the vertical support arches. The system further includes folding plates, each of which has a substantially central folding zone and two peripheral pivot zones, with the folding plates interconnecting adjacent vertical support arches such that the peripheral pivot zones of each folding plate extend to the outer side of the corresponding support arches and at a certain distance from the edge of the outer side.

From patent application CA531075 (A) is known a sliding, thanks to a system of rope and roller tracks, tarpaulin cover for the transported cargo

The solution to the above problems can be mechanisms for automatic shifting of guards. Devices designed to move guards are known to be in use that have a cable, chain or gear drive. Such devices require the use of an intricate system of rollers to guide and tension ropes and chains running along the wagon or gear strips arranged along the wagon.

Patent application EP0838385 (A1) discloses a freight car equipped with a tarp that can be moved between positions along one of the walls thanks to ties connecting opposite ends of the tarp and a winder with a reduction gear.

The purpose of the invention is to provide an efficient and reliable sliding system for guards used on various types of vehicles, with particular emphasis on rail vehicles.

The essence of the solution according to the invention is that the system comprises at least one drive unit per each leading edge of the cover, with each drive unit comprising a drive bracket and a rolling wheel connected by a belt transmission to an electric motor attached to the drive bracket, wherein the rolling wheel is pivotally mounted on an axle derived from the drive bracket parallel to the running surface for the rolling wheel. The drive bracket is attached to the support structure of the cover slidingly in a direction perpendicular to the running surface.

Advantageously, the drive bracket is attached to a plate bracket connecting the outermost pair of support arches of the tarpaulin cover.

In a favorable design, electric motors are electrically connected to each other through an electronic control system.

Advantageously, the belt transmission is a toothed belt transmission.

Advantageously, the surface of the rolling wheel has a non-slip coating.

In a favorable design, the system includes at least one control panel mounted on the outside of the vehicle.

Advantageously, the rolling wheel is pressed against the running surface by the force exerted by the spring element

Advantageously, the rolling wheel is pressed against the rolling surface by the weight of the casing support structure, to which the drive unit is attached, and the weight of the casing.

The main advantage of the solution according to the invention is its simplicity and versatility, which makes it possible to use it in trucks, freight cars and even in stationary installations such as roofed structures with sliding roofs. Its design allows it to be mounted on pre-manufactured vehicles and is used to move both walls and flexible roofs that is, for example, tarpaulins and rigid roofs. The mounting method of the drive unit gives the possibility to precisely select the force of the rolling wheel on the running surface on which it moves.

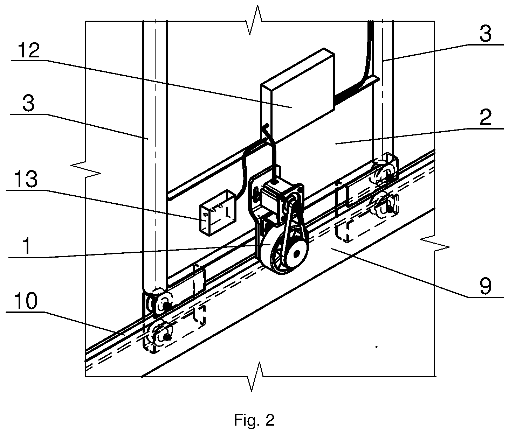

The solution according to the invention is illustrated with examples of implementation in the figures, where Fig. 1 shows a wagon with a sliding tarpaulin cover, Fig. 2 - a view of the drive unit mounted on the support structure of the cover, Fig. 3 and Fig. 4 - drive units with different drive supports, Fig. 5 - a block diagram of the electric control of the drive units.

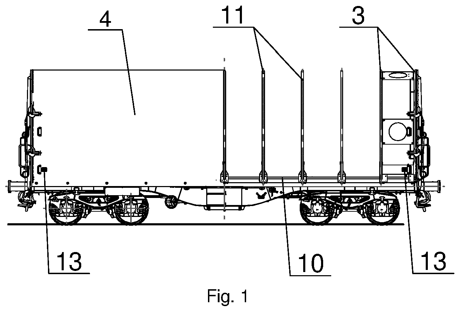

The example of the implementation of the invention shown in Fig. 1 relates to a system used to move a tarpaulin cover on a freight car, consisting of two drive units 1 located at the leading edges of the cover 4 bounding the cargo space, which is a tarpaulin attached to the arches 3, which are its supporting structure. The two outermost arches 3 on either side of the cover 4 are connected by plate brackets 2, to which the plate brackets 2 are attached to the drive units 1.

The drive unit 1 comprises an electric motor 8 attached to the drive bracket 5 and a rolling wheel 6 connected to the electric motor 8 by a belt transmission, preferably a toothed belt transmission. The rolling wheel 6 is pivotally seated on an axis derived from the drive bracket 5, the axis being parallel to the running surface 9 along which the rolling wheel 6 rolls.

In the drive bracket 5, linearly elongated mounting holes 14 are made, through which mounting bolts 15 are inserted to ensure stable attachment of the drive unit 1 to the supporting structure of the cover 4, in this case to the plate bracket 2. The shape of the mounting holes makes it possible to adjust the position of the drive unit 1 in the direction perpendicular to the running surface 9, and thus the force of the rolling wheel 6 on the running surface 9.

The rolling wheel 6 has a coating on its circumference, which prevents it from sliding on the running surface 9

The rolling wheels 6 are pressed against the running surface 9, which in the case of side guards for a wagon is the upper surface of the wagon's spur, and in the case of a wheeled vehicle its platform, by the force exerted by the spring element or under the weight of the support arches 3 to which the drive units 1 are attached and the weight of the cover 4 stretched over these support arches 3. The rotation of the rolling wheel 6 causes it to roll on the running surface 9, as a result of which the outermost support arches 3 are moved, which pull the other support arches, and thus the cover 4 is pulled apart or slid shut.

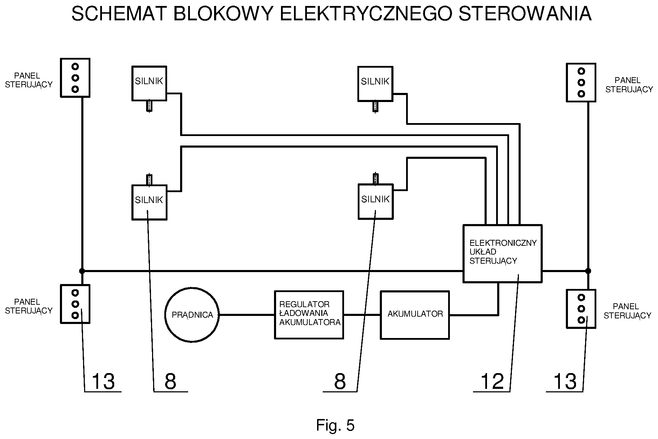

The electric motors 8 of each pair of drive units 1 attached to the ends of the cover 4 are electrically connected to each other through an electronic control system 12, as shown in Fig. 5. Activation of the device is carried out by means of buttons on control panels 13 located advantageously at each end of the vehicle on both sides, either remotely wirelessly or by manually initiating or stopping the movement of the cover 4.

The electronic control system 12 for the operation of the motors 8 automatically stops the sliding of the cover 4 when it is opened, closed or when an obstacle, such as an object or a person, is in the path of the sliding shield. The electric motors 8 and the electronic control system 12 are supplied with electricity from an external source or from an electric battery, charged by a generator mounted in the axlebox of the wheelset and a charging regulator.

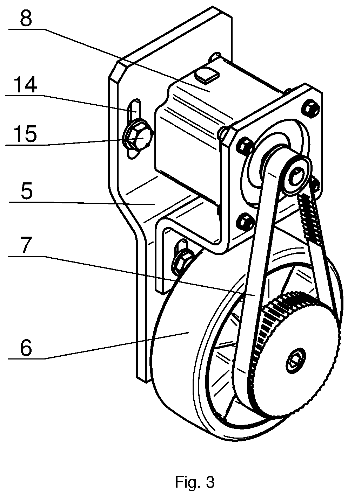

In the first manufacturing example illustrated in Fig. 3, the drive bracket 5 is in the form of two interconnected vertical zetals located opposite to each other, which are advantageously connected to each other in a sliding manner, which makes it possible to adjust the belt tension of the belt transmission.

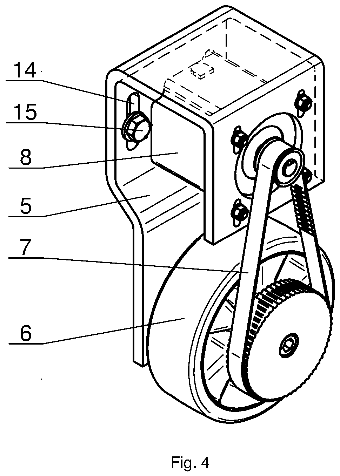

In the second manufacturing example illustrated in Fig. 4, the drive bracket is in the form of a vertical section shaped like an inverted U.

## Claims

1. A system for automatic sliding of cargo space covers, especially freight cars and other vehicles equipped with an electric drive, **characterized in that** it contains at least one drive unit (1) per each leading edge of the cover (4), wherein each drive unit (1) comprises a drive bracket (5) and a rolling wheel (6) connected by a belt transmission (7) to an electric motor (8) attached to the drive bracket (5), wherein the rolling wheel (6) is mounted pivotally on an axle derived from the drive bracket (5) parallel to the running surface (9) for the rolling wheel (6), while the drive bracket (5) is attached to the support structure of the cover (4) slidingly in a direction perpendicular to the running surface (9).

2. System according to claim 1, **characterized in that** the drive bracket (5) is attached to a plate bracket (2) connecting the outermost pair of support arches (3) of the tarpaulin cover (4).

3. System according to claim 1 **characterized by** the fact that the electric motors (8) are electrically connected to each other through an electronic control system (13).

4. System according to claim 1 **characterized by** the fact that the belt transmission (7) is a toothed belt transmission.

5. System according to claim 1 **characterized by** the fact that the surface of the rolling wheel (6) has an anti-slip coating.

6. System according to claim 1, **characterized in that** it includes at least one control panel (13) mounted outside the vehicle.

7. System according to claim 1, **characterized in that** the rolling wheel (6) is pressed against the running surface (9) by a force exerted by a spring element.

8. System according to claim 7, **characterized by** the fact that the rolling wheel (6) is pressed against the running surface (9) by the weight of the support structure of the cover (4), to which the drive unit (1) is attached, and by the weight of the cover (4) itself.
